# EUROPEAN PATENT APPLICATION

(11) **EP 1 930 894 A2**
(43) Date of publication of application: **11.06.2008**
(21) Application number: 07112238.6
(22) Date of filing: 11.07.2007
(51) Int. Cl.: G11B 17/04, G11B 31/00

(54) **Disk loading apparatus and mobile electronic device having the same**

(30) Priority: 06.12.2006 KR 20060123217
(71) Applicant: Samsung Electronics Co., Ltd., Suwon-si, Gyeonggi-Do (KR)
(72) Inventor: KIM, Jun-young, Yeongtong-gu,Suwon-si,Gyeonggi-do (KR); CHO, Young-ho, Paldal-gu, Suwon-si, Gyeonggi-do (KR); BAIK, Chung-hum, Yeongtong-gu, Suwon-si, Gyeonggi-do (KR); SEO, Jae-kab, Mangpo-dong,Yeongtong-gu,Suwon-si,Gyeonggi-do (KR); Kim, Jung-hyeon, Byeongjeom-dong Hwaseong-si Gyeonggi-do (KR)
(74) Representative: Grünecker, Kinkeldey, Stockmair & Schwanhäusser Anwaltssozietät

(57) **Abstract**

A disk loading apparatus, such as is disposed on a mobile electronic device to load a disk in a position [to] record information to or reproduce information from the disk, includes a main chassis, a loader assembly disposed on the main chassis to raise and lower the disk, and having a chucking unit, conveying rollers disposed to the main chassis to move the disk, a guide unit to guide ascending and descending movements of the loader assembly, so that the chucking unit compresses and chucks the disk, and a power transmitting unit to transmit power to the conveying rollers and the guide unit. With this, the mobile electronic device, such as a camcorder or the like, can implement a conveyance of the disk while satisfying such characteristics as a quality in appearance thereof, and a miniaturization in size thereof.

## Description

### BACKGROUND OF THE INVENTION

### 1. Field of the Invention

The present general inventive concept relates to a disk loading apparatus and an electronic device having the same.

### 2. Description of the Related Art

Typically, a disk loading apparatus is a mechanism to position a disk in a device that records information on and/or reproduces information from the disk, such as is used with a compact disc (CD), a digital versatile disc (DVD), a blue-ray disc (BD), etc.

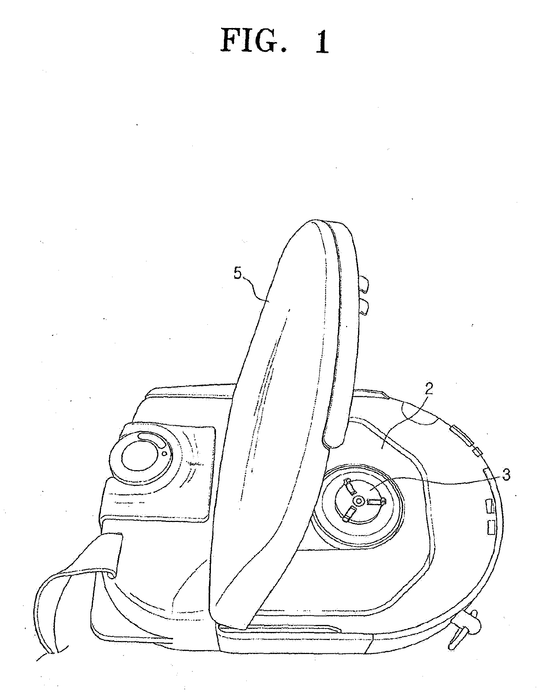

As illustrated in FIG. 1, a device, such as a CD player, incorporates a typical disk loading apparatus that includes a loader assembly 2 in which a chucking unit 3 and an optical pickup unit (not illustrated) are mounted, a main chassis to mount the loader assembly 2 in the player, and a player cover 5.

Since the conventional disk loading apparatus as described above does not have a separate disk conveying unit, a user must directly open the cover 5 and then load the disk in or remove the disk from the chucking unit 3 of the loader assembly 2. Consequently, the conventional disk loading apparatus is inconvenient to use and may diminish recording or reproducing quality if damage to the disk is caused by a user's carelessness.

In recent years, disk loading apparatuses have been equipped with a conveying unit to convey the disk into the device casing. However, such disk loading apparatuses are difficult to incorporate into a mobile electronic device, such as a camcorder or the like, because mounting the disk conveying unit interferes with the appearance of the product and/or the resulting large size of the product is inhibitive.

### SUMMARY OF THE INVENTION

Accordingly, the present general inventive concept provides a disk loading apparatus and a mobile electronic device having the same having a disk conveying unit that can be mounted without adversely affecting the appearance of the design of the product, and is compact to incorporate into highly mobile devices.

Additional aspects and utilities of the present general inventive concept will be set forth in part in the description which follows and, in part, will be obvious from the description, or may be learned by practice of the general inventive concept.

The foregoing and/or other aspects and utilities of the present general inventive concept are achieved by providing a disk loading apparatus including a main chassis, a loader assembly vertically displaceable with respect to the main chassis, conveying rollers to move a disk along a disk conveyance path, a guide unit to vertically displace the loader assembly, and a power transmitting unit to transmit power to the conveying rollers and the guide unit.

The conveying rollers may be implemented byat least two rollers respectively disposed on both sides of a disk conveyance path.

The guide unit may include a cam gear disposed on an upper surface of the main chassis to be rotatable by the power transmitted from the power transmitting unit, and a first slide member disposed on the main chassis to be slidable responsive to rotation of the cam gear, and to raise and lower the loader assembly.

The first slide member may include a rack gear meshed with the cam gear.

The first slide member may have formed on both sides thereof ascending and descending grooves with a predetermined profile, and the loader assembly may include ascending and descending protrusions formed at both sides thereof to be inserted into and to be movable along the ascending and descending grooves.

The power transmitting unit may include a driving motor disposed on the main chassis and producing rotational power, a first gear train of a plurality of gears to transmit the power of the driving motor to the conveying rollers, and a second gear train of a plurality of gears in transmit the power of the driving motor to the cam gear.

The power transmitting unit may further include a worm gear to rotate while meshing with an axial gear of the driving motor, and to simultaneously transmit the power to the first and the second gear trains.

The first and the second gear trains may be disposed so that respective rotating axes thereof are perpendicular to each other.

The first gear train may be disposed between the conveying rollers on a side of the main chassis.

The second gear train may be disposed on the upper surface of the main chassis.

The apparatus may further include a power blocking unit to block a power transmission of the first gear train when a horizontal conveyance of the disk is completed.

The power blocking unit may include a second slide member disposed to the main chassis to be slidable responsive to rotation of the cam gear, and to displace at least one of the plurality of gears of the first gear train in an axial direction to disengage the at least one of the plurality of gears from a gear adjacent thereto.

The cam gear may include a cam groove, and the second slide member may include a cam protrusion inserted into the cam groove to be displaceable along the cam groove.

The foregoing and/or other aspects and utilities of the present general inventive concept may also be achieved by providing a mobile electronic device including a data processing device, and a disk loading apparatus having a construction as described above disposed on the data processing device to load a disk in a position to record information on or reproduce information from the disk.

The mobile electronic device may be configured so that the data processing device includes a camcorder.

The foregoing and/or other aspects and utilities of the present general inventive concept may also be achieved by providing an apparatus to load a disk including a first conveying unit to convey the disk in a plane from an initial station on a disk conveyance path to a lower intermediate station on the disk conveyance path, a second conveying unit to convey the disk from the lower intermediate station to a final station on the disk conveyance path through an upper intermediate station on the disk conveyance path, the upper intermediate station to reside in a plane separate and parallel to the plane containing the initial station and the lower intermediate station, and a power blocking unit to inhibit the conveying the disk by the first conveying unit upon the disk being conveyed thereby to the lower intermediate station.

The foregoing and/or other aspects and utilities of the present general inventive concept may also be achieved by providing a disk loading apparatus including a loader assembly having a chucking unit to be coupled with a disk, a conveying roller to move the disk between an initial station and a lower intermediate station, and a guide unit to move the loader assembly from a first position to a second position to couple the chucking unit and the disk at an upper intermediate station and to move the loader assembly from the second position to a third position to locate the disk coupled to the chucking unit in a final station.

The foregoing and/or other aspects and utilities of the present general inventive concept may also be achieved by providing a disk loading apparatus including a housing having a slit formed therein to receive a disk, a loader assembly having a chucking unit to be coupled to the disk, a conveying unit to convey the disk received at an initial station to a lower intermediate station on the loader assembly, a first slide member to raise the loader assembly from the lower intermediate station to an upper intermediate station to couple the disk and the chucking unit thereat and to thereafter lower the loader assembly into a final station, and a second slide member coupled to the first slide member to inhibit conveyance of the disk by the conveying unit upon arrival of the disk at the lower intermediate station.

The foregoing and/or other aspects and utilities of the present general inventive concept may also be achieved by providing a mobile electronic apparatus including a signal processing device to process a signal and to access a disk to store a representation of the signal thereon or to recover the representation of the signal therefrom, a power transmitting unit to deliver mechanical power, and a disk loading apparatus to position the disk to be accessed by the signal processing apparatus, where the disk loading apparatus includes a loader assembly having a chucking unit to be coupled with the disk, a conveying roller to move the disk between an initial station and a lower intermediate station, and a guide unit to move the loader assembly from the lower intermediate station to an upper intermediate station to couple the chucking unit and the disk thereat and to move the loader assembly having the disk coupled to the chucking unit thereon from the upper intermediate station to a final station, wherein the disk is accessed by the signal processing device at the final station.

### BRIEF DESCRIPTION OF THE DRAWINGS

These and/or other aspects and utilities of the present general inventive concept will become apparent and more readily appreciated from the following description of the embodiments, taken in conjunction with the accompanying drawings of which:

FIG. 1 is a perspective view exemplifying a conventional disk loading apparatus;

FIGS. 2 and 3 are schematic views exemplifying a disk loading apparatus according to an exemplary embodiment of the present general inventive concept;

FIG. 4 is a schematic view exemplifying the disk loading apparatus of FIG. 2 from which a loader assembly is removed;

FIG. 5 is a view exemplifying a power transmitting operation of a driving motor;

FIGS. 6A and 6B are views exemplifying a disk conveying operation of the disk loading apparatus according to the exemplary embodiment of the present general inventive concept;

FIG. 7 is a view exemplifying a power blocking operation of the disk loading apparatus according to the exemplary embodiment of the present general inventive concept;

FIGS. 8A through 8D are illustrations exemplifying a disk chucking operation of the disk loading apparatus according to the exemplary embodiment of the present general inventive concept; and

FIG. 9 is a perspective view exemplifying a camcorder incorporating the disk loading apparatus according to an exemplary embodiment of the present general inventive concept.

### DETAILED DESCRIPTION OF THE PREFERRED EMBODIMENTS

Reference will now be made in detail to the embodiments of the present general inventive concept, examples of which are illustrated in the accompanying drawings, wherein like reference numerals refer to the like elements throughout. The embodiments are described below in order to explain the present general inventive concept by referring to the figures.

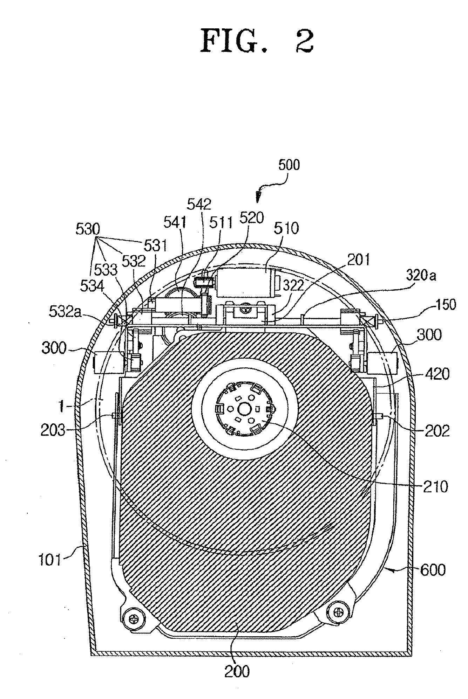

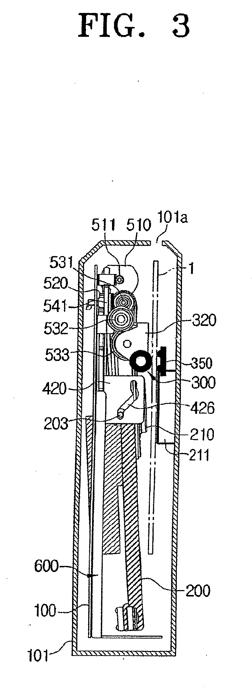

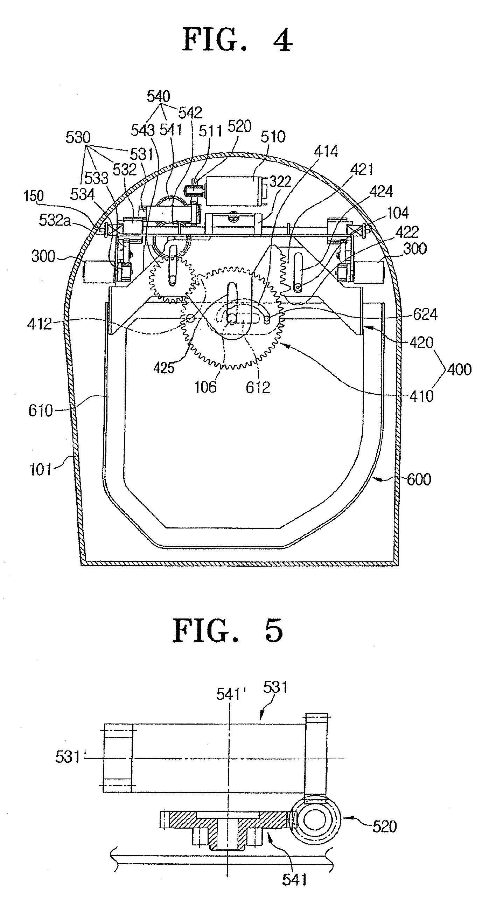

FIGS 2 and 3 are schematic views illustrating a disk loading apparatus according to an exemplary embodiment of the present general inventive concept, FIG. 4 is a schematic view illustrating the disk loading apparatus of FIG. 2 with the loader assembly removed to depict an unobstructed view of the underlying components, and FIG. 5 is a view illustrating a power transmitting configuration using an exemplary driving motor.

To aid in the descriptions below, the designation of "up" or "upper" will be used to refer to the direction facing out of the page in FIG. 2, which corresponds with the right-hand surface of the device illustrated in FIG. 3. The designation of "down" or "lower" will refer to the direction opposite to the "up" direction, i.e., into the page in FIG. 2. The designation of "front" or "forward" will be used to refer to the direction corresponding with the portion of the device at the top of both FIGS. 2 and 3, and "back" or "rearward" will refer to the opposite end of the device. The designation of "inner" refers to inside the casing of the device and, accordingly, "outer" refers to outside the casing. These directional conventions are carried through to all of the figures described herein and are arbitrarily assigned for purposes of description. As such, the directional conventions are not intended to limit the present general inventive concept in any way.

As illustrated in FIGS. 2 through 5, the disk loading apparatus according to an exemplary embodiment of the present general inventive concept is provided with a main chassis 100, a loader assembly 200, conveying rollers 300, a guide unit 400, a power transmitting unit 500, and a power blocking unit 600. It is to be understood that although this functional compartmentalization facilitates the description of various features of the present general inventive concept, many other configurations of components are intended to fall within the spirit and scope of the present general inventive concept. The elements illustrated and described in the exemplary embodiments below may be substituted, modified or relocated, as will be readily recognized by the skilled artisan upon review of this disclosure. The scope of the present general inventive concept is intended to embrace all such substitutions, modifications and relocations.

The main chassis 100 may be fastened to an inner lower surface of the casing 101, such as by screws (not illustrated). The casing 101 includes a narrow opening, such as a slit 101 a, formed at a front part thereof to insert a disk 1 therein. The slit 101 a may be viewed as an "initial station" on a disk conveyance path. Additionally, a "lower intermediate station" on the disk conveyance path may be that where the disk has been conveyed horizontally in a plane, but has yet to be captured onto a chucking unit, which is described below, and an "upper intermediate station" on the disk conveyance path may be that where the disk has been raised to capture the disk onto the chucking unit. A "final station" on the disk conveyance path may be that where the disk is lowered from the upper intermediate station to its terminal position and is chucked and ready to be accessed. The final station may be located between the lower intermediate station and the upper intermediate station or may be at the same location as the lower intermediate station. These designations allow description of general features of the present general inventive concept, and are not intended to limit the present general inventive concept in any way. For example, certain embodiments of the present general inventive concept include a power transmitting unit 500 to produce power on two perpendicular axes. One of the perpendicular axes may drive a first conveying unit to convey the disk in a plane from an initial station, such as that defined above, to a lower intermediate station, such as that defined above. A second one of the perpendicular axes may drive a second conveying unit to convey the disk from the lower intermediate station to a final station through an upper intermediate station, where the final and upper stations may be those defined above. Other locations on the disk conveyance path may be designated as certain ones of the stations thereon, and the present general inventive concept is intended to encompass all such alternative configurations.

In certain embodiments of the present general inventive concept, the front end of the loader assembly 200 is tilted away from the slit 101 a when the disk is at the initial station of the disk conveyance path, and is parallel to the main chassis 100 when the disk is at the final station. The loader assembly 200 may include a structure, such as a bent part 201, formed on the forward end thereof, which is biased towards the tilted position, such as by a first elastic member 201 a. The first elastic member 201 a may be implemented in any suitable biasing device, such as by a coil spring. The bent part 201 may be connected to a complementary structure formed on a roller bracket 320, such as extension 322, to disengage the conveying rollers 300 from the disk 1, as will be described further below.

The loader assembly 200 may be provided with a chucking unit 210, which may, in turn, be coupled to a spin motor (not illustrated) for spinning the disk in accordance with the applicable data access specifications of the device. The present general inventive concept is not limited to any specific data access mode or mechanism and implementation details, such as spinning the disk, moving an optical pickup unit (not illustrated) to a specific portion of the disk, and reading information from or writing information to the disk, will not be further elaborated upon herein.

In certain embodiments of the present general inventive concept, the loader assembly 200 has on each side thereof ascending and descending protrusions 202 and 203, which are inserted into ascending and descending grooves 426 of a first slide member 420. This exemplary arrangement tilts and raises the loader assembly 200 as will be described in further detail below.

To convey the disk 1 from the initial station on the disk conveyance path, through the slit 101 a of the casing 101, and to the lower intermediate station, the exemplary embodiment incorporates the conveying rollers 300, which may be coupled to the main chassis 100 through the roller bracket 320. In certain embodiments of the present general inventive concept, the conveying rollers 300 are respectively disposed on both sides of the disk conveyance path. The conveying rollers 300 may be mounted on opposing ends of the roller bracket 320, which is coupled to the main chassis 100 through the axel 150 on which a hinge 320a rotates. The conveying rollers 300 convey the disk 1 via a frictional engagement therewith. The disk 1 is stabilized on the conveying rollers 300 by stabilizers 350 located in opposing relationship with the conveying rollers 300. The stabilizers 350 may be of any low friction design, such as through a Teflon strip or by way of roller bearings, to allow the conveying rollers 300 to apply pressure on the disk 1, but without imposing a frictional force that opposes the conveyance of disk 1. The conveying rollers 320 may be rotated upwards to contact the disk 1 and downwards to disengage from the disk 1. To implement such rotation, as discussed above, a central portion of the roller bracket 320 may include the extension 322 to be coupled to the bent part 201 of the loader assembly 200. Thus, when the loader assembly 200 is raised, the bent part 201 moves the extension 322 upward to rotate the roller bracket 320 about its hinge 320a, thereby disengaging the conveying rollers 300 from the disk 1.

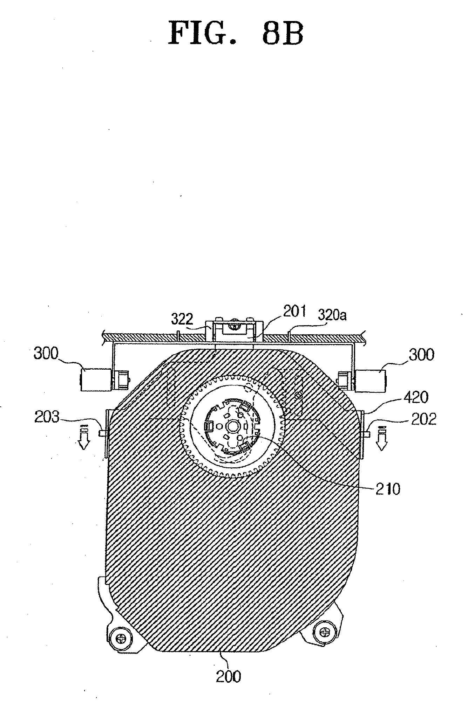

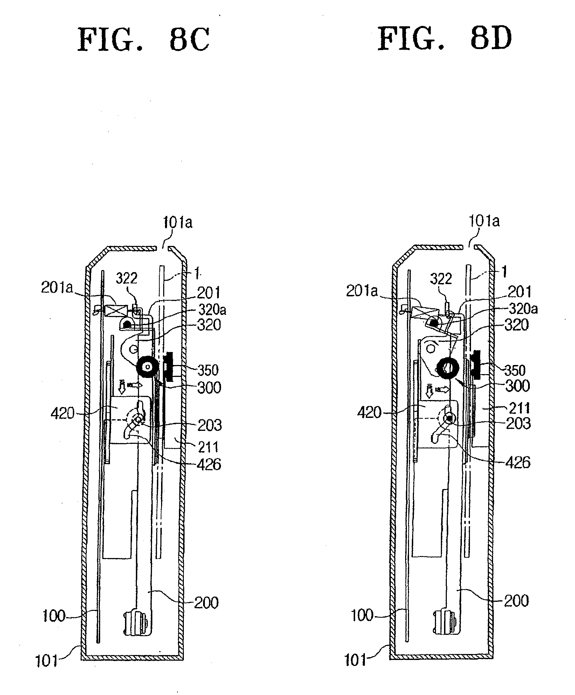

The guide unit 400 guides ascending and descending movements of the loader assembly 200, so that the chucking unit 210 may be fully inserted in the opening 1 a of the disk 1. The exemplary guide unit 400 is provided with a cam gear 410 and a first slide member 420.
The cam gear 410 may be installed in a central location on an upper surface of the main chassis 100, and may be rotated through power transferred from the power transmitting unit 500. The cam gear 410 may have a plurality of teeth formed on an outer circumference thereof. In certain embodiments, at least one of the teeth extends to an outer diameter beyond that of the other teeth in the cam gear 410 to form a starting protrusion 412. The starting protrusion 412 meshes with a corresponding starting protrusion 422 formed on a rack gear 421 of the first slide member 420 when the cam gear 410 has been rotated to a position corresponding to the lower intermediate station of the disk conveyance path, i.e., where the disk is longitudinally in its final position, but has yet to be raised on the loader assembly 200 to insert the chucking unit 210 into the opening 1 a of the disk 1. The cam gear 410 may be provided with a cam groove 414 into which a cam protrusion 624 of a second slide member 610 may be inserted. In certain embodiments of the present general inventive concept, the cam groove 414 is formed in a predetermined arc shape that displaces the power blocking unit 600, as will be described in more detail below. The first slide member 420 is mounted on the main chassis 100 to be displaceable between the front and the rear thereof responsive to rotation of the cam gear 410, so that the loader assembly 200 is raised and lowered. In certain embodiments of the present general inventive concept, the first slide member 420 has at least one guide groove 424 formed on opposing sides thereof to accommodate a corresponding guide pin 104 formed on the upper surface of the main chassis 100, and may further have a guide groove 425 slidably engaged with a centrally located guide pin 106. The first slide member 420 may be provided with the rack gear 421, which, when the first slide member 420 is positioned over the cam gear 410, is meshed with the cam gear 410. The rack gear 421 may have at least one corresponding starting protrusion 422, which engages with the starting protrusion 412 of the cam gear 410 and thereafter, the cam gear 410 and rack gear 421 engage to longitudinally displace the first slide member 420. The first slide member 420 may have at both sides thereof ascending and descending grooves 426, each having a predetermined profile, so that the ascending and descending protrusions 202 and 203 of the loader assembly 200 can be inserted into a corresponding one of the ascending and descending grooves 426 and moved along the ascending and descending grooves 426, respectively, to position the loader assembly 200 in accordance with the predetermined profile. In certain embodiments of the present general inventive concept, the predetermined profile of the ascending and descending grooves 426 includes a plurality of groove segments to position the loader assembly 200 in a plane corresponding to the particular station on the disk conveyance path. For example, the ascending and descending grooves 426 may have a lower segment corresponding to the tilted state of the loader assembly 200 while the disk 1 is being conveyed from the initial station to the lower intermediate station. FIG. 3 illustrates the ascending and descending protrusion 203 in such a lower segment of the ascending and descending grooves 426. The ascending and descending grooves 426 may have a slanted segment to raise the loader assembly 200 to the lower intermediate station. FIG. 8C illustrates the ascending and descending protrusion 203 in the slanted segment of the ascending and descending grooves 426 corresponding to the lower intermediate station. The ascending and descending grooves 426 may have a peak segment corresponding to the loader assembly 200 being conveyed to the upper intermediate station.
FIG. 8D illustrates the ascending and descending protrusion 203 in the peak segment of the ascending and descending grooves 426 corresponding to the upper intermediate station. The ascending and descending grooves 426 may then have an upper segment to convey the loader assembly from the upper intermediate station into the final station.

The power transmitting unit 500 transfers rotational power, i.e., torque per unit time, to the conveying rollers 300 and the guide unit 400. The power transmitting unit 500 may be provided with a driving motor 510, a worm gear 520, a first gear train 530, and a second gear train 540. The driving motor 510 may be fastened to the main chassis 100 by suitable fasteners, such as by screws (not illustrated), and may have an axial gear 511 formed on a rotating axis thereof. The worm gear 520 is rotated while meshing with the axial gear 511, and simultaneously transfers power to the first gear train 530 and the second gear train 540. To transfer the power of the driving motor 510 to the conveying roller 300, the first gear train 530 may include a plurality of gears. For example, the first gear train 530 may include a first rotation gear 531, a second rotation gear 532, a third rotation gear 533, and a fourth rotation gear 534, although the present general inventive concept is not limited to the number of gears in the first gear train 530. In this example, the first rotation gear 531 rotates while meshing with the worm gear 520, the second rotation gear 532 rotates while meshing with the first rotation gear 531, the third rotation gear 533 rotates while meshing with the second rotation gear 532, and the fourth rotation gear 534 is joined to rotating axes of the conveying rollers 300 and rotates while meshing with the third rotation gear 533. The first, the second, the third, and the fourth rotation gears 531, 532, 533 and 534 may be disposed so that rotating axes thereof are parallel to one another and parallel to a plane in which the main chassis 100 resides, that is, parallel in a horizontal direction. In certain embodiments of the present general inventive concept, the second rotation gear 532 is installed on an axel 150 and is displaceable thereon in an axial direction, so that it can disengage the first rotation gear 531 from the second rotation gear 532, so as to interrupt the transfer of power to the second rotation gear 532. It is to be understood, however, that removing power from the first gear train 530 may be achieved in other ways without departing from the spirit and intended scope of the present general inventive concept. The first gear train 530 may be disposed between the conveying rollers 300. To transfer power of the driving motor 510 to the cam gear 410, the second gear train 540 may be made up of a plurality of gears. For example, the second gear train 540 may include a first loading gear 541, a second loading gear 542, and a third loading gear 543, although the present general inventive concept is not limited to the number of gears in the second gear train 540. The first loading gear 541 rotates while meshing with the worm gear 520, the second loading gear 542 rotates while meshing with the first loading gear 541, and the third loading gear 543 rotates the cam gear 410 while meshing with the second loading gear 542. The first, the second, and the third loading gears 541, 542, and 543 may be disposed so that rotating axes thereof are parallel to one another in a vertical direction. In certain embodiments of the present general inventive concept, the second gear train 540 is disposed on the upper surface of the main chassis 100. The first rotation gear 531 and the first loading gear 541 may both be meshed with the worm gear 520 so that the respective rotating axes 531' and 541' thereof are perpendicular to each other, as is illustrated in FIG. 5.

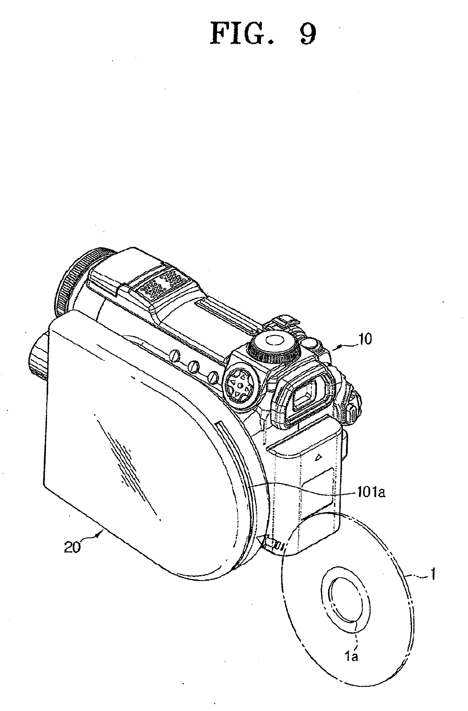

In certain embodiments of the present general inventive concept, portions of the power transmitting unit 500 may be located outside the casing 101 or may be part of another mechanism in a shared casing. For example, the drive motor 510 and a certain number of gears may be located in a mobile electronic device, such as illustrated in FIG. 9. The external drive motor may be coupled to the disk loading apparatus through a selectively engaged gear assembly to deliver mechanical power to the disk loading apparatus when needed thereby. The present general inventive concept is intended to encompass these configurations, as well as modifications and alternatives that become apparent to the skilled artisan upon review of this disclosure.

To stop the rotation of the conveying rollers 300 when the disk 1 has been conveyed to the lower intermediate station, the power blocking unit 600 blocks the power transmission of the first gear train 530. In certain embodiments of the present general inventive concept, the power blocking unit 600 includes a second slide member 610, which is laterally displaceable on the main chassis 100, i.e., slidable left and right, responsive to the rotation of the cam gear 410. The power blocking unit 600 may be displaced in accordance with the profile of the cam groove 414, which, in certain embodiments of the present general inventive concept is an eccentric arc with respect to the center of the cam gear 410. The power blocking unit 600 may press at least one of the gears in the first gear train 530, for example, the second rotation gear 532, in an axial direction, i.e., along the axis of axel 150, to disconnect it from a gear adjacent thereto, for example, the first rotation gear 531. In certain embodiments of the present general inventive concept, a second elastic member 532a, for example, a coil spring, is disposed on the outside of the second rotation gear 532 to bias the second rotation gear 532 in an inward direction. The second slide member 610 may have at least one guide groove 612 formed in left and right directions therein to accommodate a guide pin 106 on the upper surface of the main chassis 100 and may be disposed below the cam gear 410. The second slide member 610 may have a cam protrusion 624, which is inserted into the cam groove 414 of the cam gear 410 to be to be positioned laterally in accordance with the eccentricity of the cam groove 414.

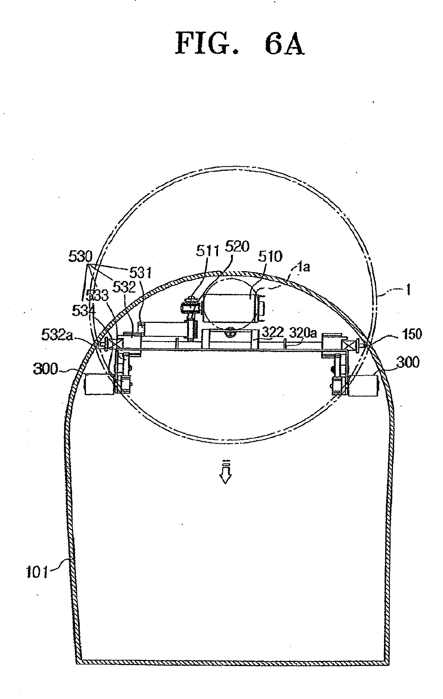

Referring to FIGS. 6A-6B, a disk loading apparatus according to the exemplary embodiment of the present general inventive concept constructed as described above, senses a disk 1 being inserted through the slit 101 a on the front of the casing 101, i.e., senses the disk 1 at the initial stage of the disk conveyance path, and a control unit (not illustrated) operates the driving motor 510 accordingly. Such sensing may be achieved by a suitable proximity sensing device, such as a mechanical or optical switch. As the worm gear 520 is rotated by the driving motor 510, the first loading gear 541 and the first rotation gear 531, which are axially perpendicular to one another, rotate through power provided by the worm gear 520. The first and the second gear trains 530 and 540 respectively transfer the power provided by the rotation of the first rotation gear 531 and the first loading gear 541, respectively.

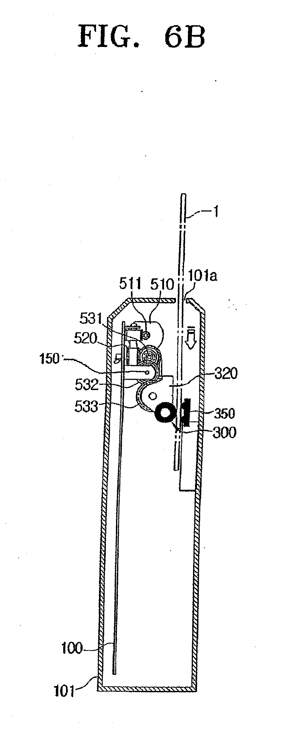

As illustrated in FIGS. 6A and 6B, when the worm gear 520 is rotated by the driving motor 510, the plurality of gears, that is, the first, the second, the third, and the fourth rotation gears 531, 532, 533 and 534, forming the first gear train 530 are rotated in turn, and the conveying rollers 300 coaxially connected to the fourth rotation gear 534 is rotated to convey the disk 1.

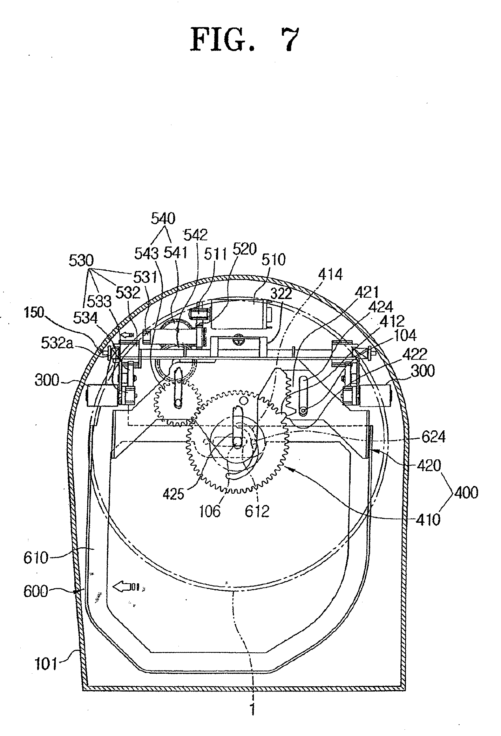

As illustrated in FIG. 7, when the cam gear 410 is rotated up to a point where the disk 1 has been conveyed to the lower intermediate station of the disk conveyance path, which corresponds to a position where the starting protrusion 412 of the cam gear 410 and the corresponding protrusion 422 of the rack gear 421 are meshed with each other, the second slide member 610 is slid left by the cam gear 410. As the second slide member 610 is displaced, the second slide member 610 at one side thereof pushes the second rotation gear 532 left to disengage the first rotation gear 531 from the second rotation gear 532. As a result, the power transmitted from the driving motor 510 is blocked and the conveying rollers 300 stop rotating.

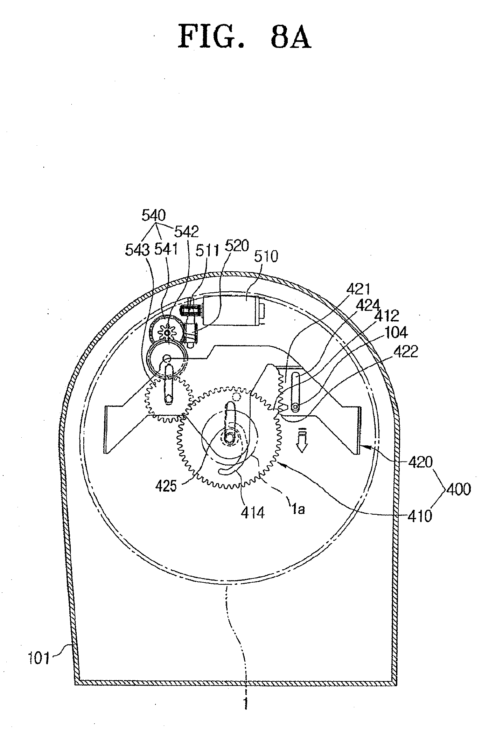

As illustrated in FIGS 8A through 8D, when the cam gear 410 is further rotated from a state where the rotation of the conveying rollers 300 is stopped, that is, a state where the conveyance of the disk 1 is stopped at the lower intermediate station, the rack gear 421 is meshed with the cam gear 410, so that the first slide member 420 is moved rearward. As the first slide member 420 is moved rearward, the ascending and descending protrusions 202 and 203 formed on the both sides of the loader assembly 420 are moved along the inner surfaces of the ascending and descending grooves 426 formed on the both sides of the first slide member 420, and thereby the loader assembly 200 is raised, thereby pressing the disk 1 against the compression ring 211. The compression ring 211 may be a hollow cylindrical structure disposed on, for example, the upper inner surface of the casing 101. An opening formed in the compression ring 11 and in communication with the hollow interior thereof may be sized to accommodate the chucking unit 210. As the first slide member continues to move rearward, the loader assembly 200 continues to rise and the chucking unit 210 is forced through the opening 1 a of the disk 1, which is held against the compression ring 211. Once the disk 1 has been captured by the chucking unit 210, the disk 1 is in the upper intermediate station of the disk conveyance path. The profile of the ascending and descending grooves 426 may be formed so that the disk 1, captured by the chucking unit 210, is then lowered away from the compression ring 211 into the final station of the disk conveyance path as the first slide member 420 completes its motion towards the rear of the main chassis 100. Meanwhile, as the loader assembly 200 is raised, the bent part 201 formed on the loader assembly 200 pushes up on the extension 322 of the roller bracket 320 to rotate the roller bracket 320 about the hinge 320a, and thus the conveying rollers 300 mounted on the roller bracket 320 are separated from the disk 1. When the conveying rollers 300 are separated from the disk 1, the loader assembly is also lowered away from the compression ring 211 and the disk 1 is then at the final station of the disk conveyance path. The disk loading apparatus is then in a disk-recordable or reproducible condition.

In certain embodiments of the present general inventive concept, the ejection of the disk 1 is achieved by performing the operations described above in reverse order, with certain differences. When the disk loading apparatus receives an ejection command, such as by a user actuation an eject button (not illustrated), the control unit (not illustrated) operates the drive motor 510 to produce rotational power in the opposite direction as that provided in the disk loading operation. Thus, power provided to the cam gear 410, the first gear train 530 and the second gear train 540 is in the reverse direction, and the disk 1 is conveyed along the disk conveyance path in the opposite direction. The disk 1 is first raised from the final station to the upper intermediate station. Since the disk 1 is already captured by the chucking unit 210, no unloading operation is actually preformed in the upper intermediate station. When the disk 1 is lowered into the lower intermediate station, the conveying rollers are raised to engage with the disk 1. As the first sliding member 420 continues forward, the loader assembly 200 is caused, via the shape of the ascending and descending grooves 426, to tilt forward away from the opening. The disk 1 is engaged with an upper surface of the conveying rollers 300 and as the loader assembly 200 tilts forward, the disk 1 is disengaged from the chucking unit 210. The conveying rollers 300 then convey the disk 1 out of the casing 101 through the opening 101 a and into the initial position on the disk conveyance path. The disk 1 can then be removed by the user.

As illustrated in FIG. 9, a mobile electronic device according to an exemplary embodiment of the present general inventive concept is provided with a data processing device 10, and a disk loading apparatus 20 constructed as described above, which is mounted on the data processing device 10 to load a disk 1 in a position to record information on or reproduce information from the disk 1. The data processing device 10 may be any device that would produce data to be stored on the disk 1 and/or would request data that is stored on the disk 1. For example, a mobile electronic device according to an exemplary embodiment of the present general inventive concept may include a data processing device 10 in the form of a camcorder, which is the embodiment illustrated in FIG. 9.

As apparent from the foregoing description, according to the exemplary embodiments of the present general inventive concept, the disk loading apparatus and the mobile electronic device having the same can embody the conveyance of the disk while satisfying a quality in appearance design of the product, such as the camcorder or the like, a miniaturization of the product, etc.

Although a few embodiments of the present general inventive concept have been shown and described, it will be appreciated by those skilled in the art that changes may be made in these embodiments without departing from the principles and spirit of the general inventive concept, the scope of which is defined in the appended claims and their equivalents.

## Claims

1. A disk loading apparatus comprising:
a main chassis;
a loader assembly displaceable with respect to the main chassis, and having a chucking unit;
one or more conveying rollers disposed on the main chassis to move a disk along a disk conveyance path;
a guide unit to displace the loader assembly, so that the chucking unit is insertably coupled to the disk; and
a power transmitting unit to transmit power to the conveying rollers and the guide unit.

2. The apparatus of claim 1, wherein the conveying rollers comprises:
at least two rollers respectively disposed on both sides of the disk conveyance path.

3. The apparatus of claim 1, wherein the guide unit comprises:
a cam gear disposed on an upper surface of the main chassis to be rotatable by the power transmitted from the power transmitting unit; and
a first slide member disposed to the main chassis to be slidable responsive to rotation of the cam gear, and to raise and lower the loader assembly thereby.

4. The apparatus of claim 3, wherein the first slide member comprises a rack gear meshed with the cam gear.

5. The apparatus of claim 4, wherein the first slide member has formed therein at opposing sides thereof ascending and descending grooves with a predetermined profile , and the loader assembly comprises ascending and descending protrusions formed at both sides thereof to be inserted into and to be movable along the ascending and descending grooves.

6. The apparatus of claim 3, wherein the power transmitting unit comprises:
a driving motor disposed on the main chassis and producing rotational power;
a first gear train of a plurality of gears to transmit the power of the driving motor to the conveying rollers; and
a second gear train of a plurality of gears to transmit the power of the driving motor to the cam gear.

7. The apparatus of claim 6, wherein the power transmitting unit further comprises:
a worm gear to rotate while meshing with an axial gear of the driving motor, and to simultaneously transmit the power to the first and the second gear trains.

8. The apparatus of claim 7, wherein the first and the second gear trains are disposed so that respective rotating axes thereof are perpendicular to each other.

9. The apparatus of claim 6, wherein the first gear train is disposed between the conveying rollers on a side of the main chassis.

10. The apparatus of claim 6, wherein the second gear train is disposed on the upper surface of the main chassis

11. The apparatus of claim 6, further comprising:
a power blocking unit to block a power transmission of the first gear train when a conveyance of the disk is completed.

12. The apparatus of claim 11, wherein the power blocking unit comprises a second slide member disposed to the main chassis to be slidable responsive to rotation of the cam gear, and to displace at least one of the plurality of gears of the first gear train in an axial direction so as to disengage the at least one of the plurality of gears from a gear adjacent thereto.

13. The apparatus of claim 12, wherein the cam gear includes a cam groove, and the second slide member includes a cam protrusion inserted into the cam groove to be displaceable along the cam groove.

14. A disk loading apparatus, comprising:
a main chassis:
a loader assembly vertically displaceable with respect to the main chassis;
one or more conveying rollers disposed on the main chassis to move a disk along a conveyance path;
a cam gear disposed on the main chassis;
a driving motor disposed on the main chassis to deliver rotational power;
a first gear train to transmit the power of the driving motor to the conveying rollers;
a second gear train to transmit the power of the driving motor to the cam gear; and
a first slide member disposed on the main chassis to be slidable responsive to rotation of the cam gear, and to raise and lower the loader assembly.

15. The apparatus of claim 14, further comprising:
a second slide member disposed on the main chassis to be slidable responsive to the rotation of the cam gear, and to displace at least one of a plurality of gears of the first gear train in an axial direction so as to disengage the at least one of the plurality of gears from a gear adjacent thereto.

16. A mobile electronic device, comprising:
a data processing device; and
a disk loading apparatus disposed on the data processing device to load a disk in a position to record information on or reproduce information from the disk, wherein the disk loading apparatus comprises:
a main chassis;
a loader assembly displaceable with respect to the main chassis, and having a chucking unit;
one or more conveying rollers disposed on the main chassis to move the disk;
a guide unit to raise and lower the loader assembly, so that the chucking unit compresses and chucks the disk; and
a power transmitting unit to transmit power to the conveying rollers and the guide unit.

17. The device of claim 16, wherein the conveying rollers includes at least two rollers respectively disposed on each of two sides of a disk conveyance path.

18. The device of claim 16, wherein the guide unit comprises:
a cam gear disposed on an upper surface of the main chassis to be rotatable by the power transmitted from the power transmitting unit; and
a first slide member disposed on the main chassis to be slidable responsive to rotation of the cam gear, and to raise and lower the loader assembly.

19. The device of claim 18, wherein the first slide member includes a rack gear meshed with the cam gear.

20. The device of claim 19, wherein the first slide member has formed on both sides thereof ascending and descending grooves with a predetermined profile, and the loader assembly includes ascending and descending protrusions formed at both sides thereof to be inserted into and to be movable along the ascending and descending grooves.

21. The device of claim 18, wherein the power transmitting unit comprises:
a driving motor disposed on the main chassis delivering rotation power;
a first gear train of a plurality of gears to transmit the power of the driving motor to the conveying rollers; and
a second gear train of a plurality of gears to transmit the power of the driving motor to the cam gear.

22. The device of claim 21, wherein the power transmitting unit includes a worm gear to rotate while meshing with an axial gear of the driving motor, and to simultaneously transmit the power to the first and the second gear trains.

23. The device of claim 22, wherein the first and the second gear trains are disposed so that respective rotating axes thereof are perpendicular to each other.

24. The device of claim 21, wherein the first gear train is disposed between the conveying rollers on a side of the main chassis.

25. The device of claim 21, wherein the second gear train is disposed on the upper surface of the main chassis

26. The device of claim 21, further comprising:
a power blocking unit to block power transmission of the first gear train when a conveyance of the disk is completed.

27. The device of claim 26, wherein the power blocking unit comprises a second slide member disposed on the main chassis to be slidable responsive to rotation of the cam gear, and to displace at least one of the plurality of gears of the first gear train in an axial direction to disengage the at least one of the plurality of gears from a gear adjacent thereto.

28. The device of claim 27, wherein the cam gear comprises a cam groove formed thereon, and the second slide member comprises a cam protrusion inserted into the cam groove to be movable along the cam groove.

29. The device of claim 16, wherein the data processing device includes a camcorder.

30. An apparatus to load a disk, comprising:
a first conveying unit to convey the disk in a plane from an initial station on a disk conveyance path to a lower intermediate station on the disk conveyance path;
a second conveying unit to receive the disk at the lower intermediate station and to convey the disk from the lower intermediate station to a final station on the disk conveyance path through an upper intermediate station on the disk conveyance path, the upper intermediate station to reside in a plane separate and parallel to the plane containing the initial station and the lower intermediate station therefrom; and
a power blocking unit to inhibit conveying the disk by the first conveying unit upon the disk being conveyed thereby to the lower intermediate station.

31. The apparatus of claim 30, further comprising:
a power transmitting unit to transfer mechanical power to a first rotational axis and a second rotational axis, the first conveying unit being coupled to the first rotational axis and the second conveying unit being coupled to the second rotational axis.

32. The apparatus of claim 31, wherein the power transmitting unit includes:
a driving motor producing the mechanical power;
a first gear train to transfer the mechanical power from the driving motor to the first rotational axis; and
a second gear train to transfer the mechanical power from the driving motor to the second rotational axis.

33. The apparatus of claim 32, wherein the power transmitting unit includes a worm gear mechanically coupled to the driving motor to simultaneously transfer the mechanical power from the driving motor to both the first gear train and the second gear train.

34. The apparatus of claim 31, wherein the power blocking unit receives the mechanical power from the second rotational axis.

35. The apparatus of claim 34 further comprising:
a cam gear to transfer the mechanical power from the second rotational axis to the power blocking unit, the cam gear having formed therein a cam groove to engage with a cam protrusion disposed on the power blocking unit, the power blocking unit being laterally displaced by interaction of the cam protrusion in the cam groove responsive to rotation of the cam gear to disengage the power transmitting unit from the first conveying unit.

36. The apparatus of claim 35, wherein the first conveying unit includes a conveying roller on each of two sides of the disk conveyance path, each conveying roller being coupled to the power transmitting unit through an axially displaceable gear to selectively transfer the power from the power transmitting unit to each conveying roller and to decouple the power from the power transmitting unit from each conveying roller.

37. The apparatus of claim 36, wherein the axially displaceable gear is displaced by the lateral displacement of the power blocking unit.

38. The apparatus of claim 36 further comprising:
a stabilizer in spaced apart relationship with the conveying roller to stabilize the disk positioned therebetween.

39. The apparatus of claim 30, wherein the second conveying unit includes:
a loader assembly to support a chucking unit, the chucking unit being inserted into an opening in the disk; and
a guide unit to raise the loader assembly from the lower intermediate station to the upper intermediate station and to lower the loader assembly from the upper intermediate station to the final station.

40. The apparatus of claim 39 further comprising:
a power transmitting unit to transfer mechanical power to a first rotational axis and a second rotational axis, the first conveying unit being coupled to the first rotational axis and the second conveying unit being coupled to the second rotational axis; and
a cam gear to transfer the power from the second rotational axis to the guide unit.

41. The apparatus of claim 40, wherein the guide unit includes a rack gear to engage with the cam gear only upon the disk being between the lower intermediate station and the final station.

42. The apparatus of claim 41, wherein the rack gear and the cam gear have complementary starting protrusions respectively formed thereon, the starting protrusions extending beyond an extent of the gear teeth respectively formed on the rack gear and the cam gear, the starting protrusions engaging one with the other upon the disk being conveyed to the lower intermediate station.

43. The apparatus of claim 39 further comprising a compression ring axially aligned with the chucking unit such that raising the loader assembly to the upper intermediate station inserts the chucking unit into the compression ring to force an opening in the disk onto the chucking unit.

44. The apparatus of claim 40, wherein the first conveying unit includes at least one conveying roller coupled to a hinged bracket to selectively engage the conveying roller with a surface of the disk and disengage the conveying roller from the surface of the disk.

45. The apparatus of claim 44, wherein the hinged bracket is coupled to the loader assembly such that positioning the loader assembly into the final station disengages the conveying roller from the surface of the disk.

46. A disk loading apparatus comprising:
a loader assembly having a chucking unit to be coupled with a disk;
a conveying roller to move the disk between an initial station and a lower intermediate station; and
a guide unit to move the loader assembly from a first position to a second position to couple the chucking unit and the disk at an upper intermediate station and to move the loader assembly from the second position to a third position to locate the disk coupled to the chucking unit in a final station.

47. The apparatus of claim 46 further comprising:
a power unit to transmit a power to the conveying roller and the guide unit,
wherein the guide unit selectively connects the power from the power unit to the conveying roller.

48. The apparatus of claim 47, wherein the guide unit comprises:
a cam gear; and
a cam groove formed in the cam gear to selectively connect the power from the power unit to the conveying roller.

49. The apparatus of claim 48 further comprising:
a first slide member having a rack gear complementary to the cam gear; and
a second slide member to move according to a profile of the cam groove.

50. The apparatus of claim 49, wherein the second slide member disconnects the conveying roller from the power unit.

51. The apparatus of claim 49, wherein the conveying roller is coupled to a hinged bracket to selectively engage the conveying roller with a surface of the disk and disengage the conveying roller from the surface of the disk.

52. The apparatus of claim 51, wherein the loader assembly is coupled to the hinged bracket so that positioning the loader assembly at the final station disengages the conveying roller from the surface of the disk.

53. The apparatus of claim 52, wherein the hinged bracket is biased to engage the conveying roller with the surface of the disk when the loader assembly is position in a plane below the final station.

54. The apparatus of claim 53, wherein the loader assembly is biased by the biased hinged bracket so as to tilt when the disk is at the initial station.

55. A disk loading apparatus, comprising:
a housing having a slit formed therein to receive a disk;
a loader assembly having a chucking unit to be coupled to the disk;
a conveying unit to convey the received disk at an initial station to a lower intermediate station on the loader assembly;
a first slide member to raise the loader assembly from the lower intermediate station to an upper intermediate station to couple the disk and the chucking unit thereat and to thereafter lower the loader assembly into a final station; and
a second slide member coupled to the first slide member to inhibit conveyance of the disk by the conveying unit upon arrival of the disk at the lower intermediate station.

56. The apparatus of claim 55 further comprising:
a power transmitting unit to produce mechanical power; and
a cam gear coupled to the power transmitting unit to receive the mechanical power therefrom and to couple the first slide member and the second slide member to respectively provide the mechanical power thereto.

57. A mobile electronic apparatus, comprising:
a signal processing device to process a signal and to access a disk to store a representation of the signal thereon or to recover the representation of the signal therefrom;
a power transmitting unit to deliver mechanical power; and
a disk loading apparatus to position the disk to be accessed by the signal processing device, the disk loading apparatus comprising:
a loader assembly having a chucking unit to be coupled with the disk;
a conveying roller to move the disk between an initial station and a lower intermediate station; and
a guide unit to move the loader assembly from the lower intermediate station to an upper intermediate station to couple the chucking unit and the disk thereat and to move the loader assembly having the disk coupled to the chucking unit thereon from the upper intermediate station to a final station, wherein the disk is accessed by the signal processing device at the final station.

58. The device of claim 57, wherein the signal processing device is an image processing device.

59. The device of claim 58, wherein the image processing device is a camcorder.
